# EUROPEAN PATENT APPLICATION

(11) **EP 4 325 792 A1**
(43) Date of publication of application: **21.02.2024**
(21) Application number: 23192022.4
(22) Date of filing: 17.08.2023
(51) Int. Cl.: H04L 41/0806, H04L 9/40, F02C 9/00

(54) **CENTRALIZED SECURITY APPROVAL FOR DISTRIBUTED DECENTRALIZED CONTROL SYSTEMS FOR AIRCRAFT ENGINES**

(30) Priority: 19.08.2022 US 202217891763
(71) Applicant: RTX Corporation, Farmington, CT 06032 (US)
(72) Inventor: ADAMSKI, Paul A., Farmington, 06032 (US); RAJAGOPALAN, Jayashree, Farmington, 06032 (US)
(74) Representative: Dehns

(57) **Abstract**

A method includes distributing a digital ledger among a plurality of nodes (301-303; 401-404; 411-414) of a distributed decentralized control system (300) for an aircraft engine 920). The distributed decentralized control system includes the plurality of nodes (301...414) and an engine control (122). The method further includes, responsive to the occurrence of a trigger event, performing a security approval for each of the plurality of nodes (301...414) based at least in part on node configuration data (311-313) for each of the plurality of nodes (301...414) and a system configuration block (320). The security approval confirms whether each of the plurality of nodes (301...414) is authorized. Each node (301...414) of the plurality of nodes (301...414) has a unique node configuration data (311-313) associated therewith. The method further includes, responsive to confirming that each of the plurality of nodes (301... 414) is authorized, updating the digital ledger among the plurality of nodes (301...414) and the engine control (122).

## Description

### BACKGROUND

The subject matter disclosed herein generally relates to aircraft engines and particularly to centralized security approval for distributed decentralized control systems for aircraft engines.

Aircraft engines can be controlled and monitored using one or more distributed control systems, which can include controller(s), sensor(s), actuator(s), and/or the like, including combinations and/or multiples thereof. For example, a sensor (e.g., temperature sensor) can monitor an aspect of the aircraft engine (e.g., temperature), can analyze data received from the sensor (e.g., temperature data), and can control an aspect of the aircraft engine (e.g., bleed air port) based on the data received from the sensor (e.g., temperature data).

### BRIEF DESCRIPTION

In one aspect of the present invention, a method is provided. The method includes distributing a digital ledger among a plurality of nodes of a distributed decentralized control system for an aircraft engine. The distributed decentralized control system includes the plurality of nodes and an engine control. The method further includes, responsive to the occurrence of a trigger event, performing a security approval for each of the plurality of nodes based at least in part on node configuration data for each of the plurality of nodes and a system configuration block. The security approval confirms whether each of the plurality of nodes is authorized. Each node of the plurality of nodes has a unique node configuration data associated therewith. The method further includes, responsive to confirming that each of the plurality of nodes is authorized, updating the digital ledger among the plurality of nodes and the engine control.

In addition to one or more of the features described herein, or as an alternative, further embodiments of the method may include that the digital ledger is based on the Ethereum blockchain.

In addition to one or more of the features described herein, or as an alternative, further embodiments of the method may include that at least one of the plurality of nodes is a sensor.

In addition to one or more of the features described herein, or as an alternative, further embodiments of the method may include that at least one of the plurality of nodes is an actuator.

In addition to one or more of the features described herein, or as an alternative, further embodiments of the method may include that the engine control is a full authority digital engine control.

In addition to one or more of the features described herein, or as an alternative, further embodiments of the method may include that performing the security approval includes: receiving, by the engine control, the unique node configuration data from each of the plurality of nodes; authenticating, by the engine control, each of the plurality of nodes using a public key; updating, by the engine control, the digital ledger; and transmitting, by the engine control, the system configuration block to each of the plurality of nodes, wherein each of the plurality of nodes updates the digital ledger based at least in part on the system configuration block.

In addition to one or more of the features described herein, or as an alternative, further embodiments of the method may include, responsive to confirming that at least one of the plurality of nodes is not authorized, preventing the at least one of the plurality of nodes from communicating with the engine control.

In addition to one or more of the features described herein, or as an alternative, further embodiments of the method may include, responsive to confirming that at least one of the plurality of nodes is not authorized, updating the digital ledger among the plurality of nodes that are authorized and the engine control to indicate that the at least one of the plurality of nodes is not authorized.

In another aspect of the present invention, a full authority digital engine control is provided and includes a memory having computer readable instructions and a processing device for executing the computer readable instructions. The computer readable instructions control the processing device to perform operations. The operations include distributing a digital ledger among a plurality of nodes of a distributed decentralized control system for an aircraft engine. The distributed decentralized control system includes the plurality of nodes and the full authority digital engine control. The operations further include, responsive to the occurrence of a trigger event, performing a security approval for each of the plurality of nodes based at least in part on node configuration data for each of the plurality of nodes and a system configuration block. The security approval confirms whether each of the plurality of nodes is authorized. Each node of the plurality of nodes has a unique node configuration data associated therewith. The operations further include, responsive to confirming that each of the plurality of nodes is authorized, updating the digital ledger among the plurality of nodes and the full authority digital engine control.

In addition to one or more of the features described herein, or as an alternative, further embodiments of the full authority digital engine control may include that the digital ledger is based on the Ethereum blockchain.

In addition to one or more of the features described herein, or as an alternative, further embodiments of the full authority digital engine control may include that at least one of the plurality of nodes is a sensor.

In addition to one or more of the features described herein, or as an alternative, further embodiments of the full authority digital engine control may include that at least one of the plurality of nodes is an actuator.

In addition to one or more of the features described herein, or as an alternative, further embodiments of the full authority digital engine control may include that performing the security approval includes: receiving, by the full authority digital engine control, the unique node configuration data from each of the plurality of nodes; authenticating, by the full authority digital engine control, each of the plurality of nodes using a public key; updating, by the full authority digital engine control, the digital ledger; and transmitting, by the full authority digital engine control, the system configuration block to each of the plurality of nodes, wherein each of the plurality of nodes updates the digital ledger based at least in part on the system configuration block.

In addition to one or more of the features described herein, or as an alternative, further embodiments of the full authority digital engine control may include, responsive to confirming that at least one of the plurality of nodes is not authorized, preventing the at least one of the plurality of nodes from communicating with the full authority digital engine control.

In addition to one or more of the features described herein, or as an alternative, further embodiments of the full authority digital engine control may include, responsive to confirming that at least one of the plurality of nodes is not authorized, updating the digital ledger among the plurality of nodes that are authorized and the full authority digital engine control to indicate that the at least one of the plurality of nodes is not authorized.

In yet another aspect of the present invention a distributed decentralized control system is provided and includes a plurality of nodes associated with an aircraft engine and an engine control. The engine control distributes a digital ledger among the plurality of node. The engine control further, responsive to the occurrence of a trigger event, performs a security approval for each of the plurality of nodes based at least in part on node configuration data for each of the plurality of nodes and a system configuration block. The security approval confirms whether each of the plurality of nodes is authorized. Each node of the plurality of nodes has a unique node configuration data associated therewith. The engine control further, responsive to confirming that each of the plurality of nodes is authorized, updates the digital ledger among the plurality of nodes and the engine control.

In addition to one or more of the features described herein, or as an alternative, further embodiments of the distributed decentralized control system may include that the engine control is a full authority digital engine control.

In addition to one or more of the features described herein, or as an alternative, further embodiments of the distributed decentralized control system may include that wherein performing the security approval includes: receiving, by the engine control, the unique node configuration data from each of the plurality of nodes; authenticating, by the engine control, each of the plurality of nodes using a public key; updating, by the engine control, the digital ledger; and transmitting, by the engine control, the system configuration block to each of the plurality of nodes, wherein each of the plurality of nodes updates the digital ledger based at least in part on the system configuration block.

In addition to one or more of the features described herein, or as an alternative, further embodiments of the distributed decentralized control system may include, responsive to confirming that at least one of the plurality of nodes is not authorized, preventing the at least one of the plurality of nodes from communicating with the engine control.

In addition to one or more of the features described herein, or as an alternative, further embodiments of the distributed decentralized control system may include, responsive to confirming that at least one of the plurality of nodes is not authorized, updating the digital ledger among the plurality of nodes that are authorized and the engine control to indicate that the at least one of the plurality of nodes is not authorized.

The above features and advantages, and other features and advantages, of the disclosure are readily apparent from the following detailed description when taken in connection with the accompanying drawings.

### BRIEF DESCRIPTION OF THE DRAWINGS

The following descriptions should not be considered limiting in any way. With reference to the accompanying drawings, like elements are numbered alike:
FIG. 1 is a partial cross-sectional illustration of a gas turbine engine, in accordance with an embodiment of the disclosure;
FIG. 2 depicts an example of an engine control configured to monitor and control operation of a gas turbine engine in real-time (or near-real time) according to one or more embodiments described herein;
FIGS. 3A and 3B depict a block diagram of a distributed decentralized control system for aircraft engines according to one or more embodiments described herein;
FIGS. 4A and 4B depict a block diagram of a distributed decentralized control system for aircraft engines according to one or more embodiments described herein; and
FIG. 5 is flow diagram of a method for centralized security approval for a distributed decentralized control system for an aircraft engine according to one or more embodiments described herein.

### DETAILED DESCRIPTION

A detailed description of one or more embodiments of the disclosed apparatus and method are presented herein by way of exemplification and not limitation with reference to the Figures.

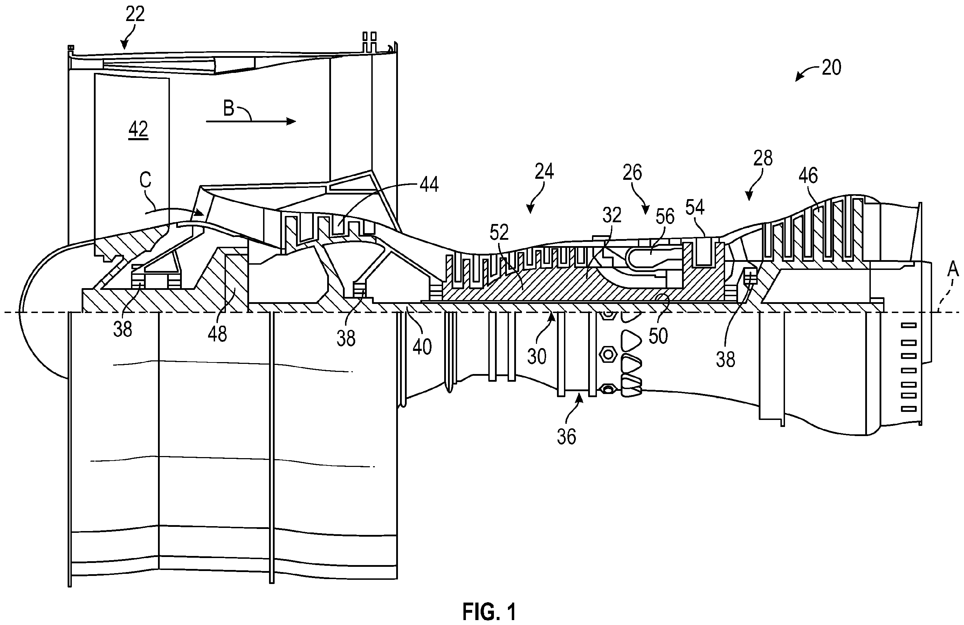

FIG. 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a low pressure compressor 44 and a low pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a high pressure compressor 52 and high pressure turbine 54. A combustor 56 is arranged in exemplary gas turbine 20 between the high pressure compressor 52 and the high pressure turbine 54. An engine static structure 36 is arranged generally between the high pressure turbine 54 and the low pressure turbine 46. The engine static structure 36 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. In some embodiments, stator vanes 45 in the low pressure compressor 44 and stator vanes 55 in the high pressure compressor 52 may be adjustable during operation of the gas turbine engine 20 to support various operating conditions. In other embodiments, the stator vanes 45, 55 may be held in a fixed position. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present disclosure is applicable to other gas turbine engines including direct drive turbofans.

A significant amount of thrust is provided by the bypass flow B due to the high bypass ratio. The fan section 22 of the engine 20 is designed for a particular flight condition--typically cruise at about 0.8Mach and about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is the industry standard parameter of Ibm of fuel being burned divided by Ibf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]0.5. The "Low corrected fan tip speed" as disclosed herein according to one non-limiting embodiment is less than about 1150 ft/second (350.5 m/sec).

While the example of FIG. 1 illustrates one example of the gas turbine engine 20, it will be understood that any number of spools, inclusion or omission of the gear system 48, and/or other elements and subsystems are contemplated. Further, rotor systems described herein can be used in a variety of applications and need not be limited to gas turbine engines for aircraft applications. For example, rotor systems can be included in power generation systems, which may be ground-based as a fixed position or mobile system, and other such applications.

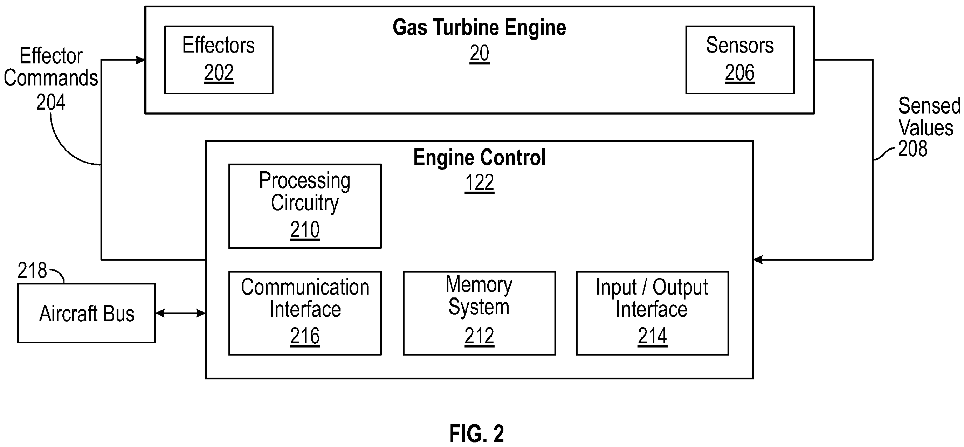

FIG. 2 depicts an example of an engine control 122 configured to monitor and control operation of a gas turbine engine (e.g., the gas turbine engine 20) in real-time (or near-real time) according to one or more embodiments described herein. The engine control 122 can control effectors 202 of the gas turbine engine 20 by generating one or more effector commands 204. Examples of effectors 202 can include one or more motors, solenoids, valves, relays, pumps, heaters, and/or other such actuation control components. A plurality of sensors 206 can capture state data associated with the gas turbine engine 20 and provide sensed values 208 as feedback to the engine control 122 to enable closed-loop control of the gas turbine engine 20 according to one or more control laws. Examples of the sensors 206 can include one or more temperature sensors, pressure sensors, strain gauges, speed sensors, accelerometers, lube sensors, and the like.

The engine control 122 (also referred to as a "controller") can be a full authority digital engine control (FADEC) that includes processing circuitry 210 (also referred to as a "processing device") and a memory system 212 configured to store a plurality of configuration items, where at least one of the configuration items includes a sequence of the computer executable instructions for execution by the processing circuitry 210. Other types of configuration items can include data, such as constants, configurable data, and/or fault data. Examples of computer executable instructions can include boot software, operating system software, and/or application software. The executable instructions may be stored or organized in any manner and at any level of abstraction, such as in connection with controlling and/or monitoring operation of the gas turbine engine 20. The processing circuitry 210 can be any type or combination of central processing unit (CPU), including one or more of: a microprocessor, a digital signal processor (DSP), a microcontroller, an application specific integrated circuit (ASIC), a field programmable gate array (FPGA), or the like. Also, in embodiments, the memory system 212 may include volatile memory, such as random access memory (RAM), and non-volatile memory, such as Flash memory, read only memory (ROM), and/or other electronic, optical, magnetic, or any other computer readable medium onto which is stored data and algorithms in a non-transitory form.

The engine control 122 can also include one or more of an input/output interface 214, a communication interface 216, and/or other elements. The input/output interface 214 can include support circuitry for interfacing with the effectors 202 and sensors 206, such as filters, amplifiers, digital-to-analog converters, analog-to-digital converters, and other such circuits to support digital and/or analog interfaces. Further, the input/output interface 214 can receive or output signals to/from other sources, such as discrete inputs/outputs and/or status signals. The communication interface 216 may communicate with an aircraft bus 218 of an aircraft. The aircraft bus 218 can provide aircraft-level parameters and commands that are used by the engine control 122 to control the gas turbine engine 20 in real-time. The communication interface 216 may also support communication with other components, such as other instances of the engine control 122, storage units, diagnostic units, communication adapters, off-board systems, and the like.

Conventional control systems for aircraft engines gather configuration information from components (e.g., sensors, actuators, and/or the like, including combinations and/or multiples thereof) and verify/report those details to other components. The configuration information may include, for example, hardware and software part numbers, serial numbers, cyclic redundancy check (CRC) values, and/or the like, including combinations and/or multiples thereof. The configuration information can be used to confirm or initiate some form of maintenance activity.

The CRC values can be used to validate components within the control system. For example, a sensor can send a CRC value to a controller, and the controller can verify the sensor using conventional CRC techniques. However, CRC techniques can easily be overcome by a bad actor. What is needed is a more robust verification for distributed components of control systems for aircraft engines.

One or more embodiments described herein overcome these and other shortcomings by providing for centralized security approval for a distributed decentralized control system for aircraft engines. For example, one or more embodiments described herein use blockchain technology to maintain a secure ledger for security approval for components of a distributed decentralized system for aircraft engines. According to one or more embodiments described herein, each component of a distributed decentralized system for aircraft engine includes: authenticated configuration data for each component of the system, software that verifies the integrity of a distributed ledger, and a hardware root of trust.

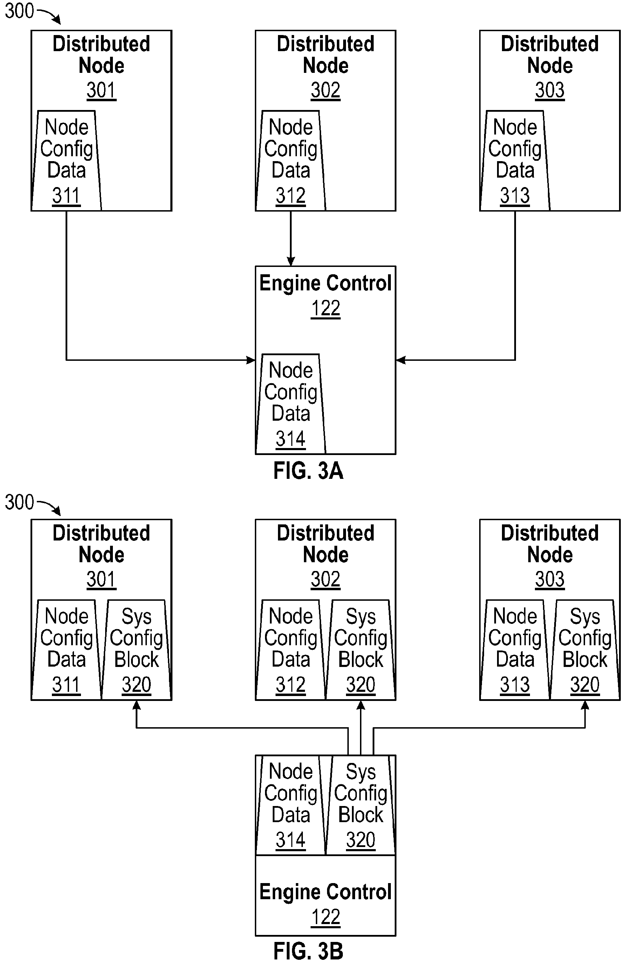

FIGS. 3A and 3B depict a block diagram of a distributed decentralized control system 300 for aircraft engines according to one or more embodiments described herein. The distributed decentralized control system 300 includes distributed nodes 301, 302, 303 and the engine control 122 of FIG. 2. As an example, the engine control 122 is a FADEC. The distributed decentralized control system 300 uses a digital ledger to provide security authentication to the components of the distributed decentralized control system 300. For example, when the distributed decentralized control system 300 boots up, the engine control 122 authenticates the distributed nodes 301-303 using the digital ledger. The digital ledger is maintained across the components of the distributed decentralized control system 300. Any suitable blockchain technology can be used to implement the digital ledger, such as the Ethereum blockchain.

In FIG. 3A, the distributed decentralized control system 300 performs authentication of the distributed nodes 301-303 using the engine control 122 by performing a security approval to confirm whether the distributed nodes 301-303 are authorized. As an example, during production of the components (e.g., the distributed nodes 301-303) of the distributed decentralized control system 300, each of the components is assigned a unique node configuration data block created and loaded onto the node. For example, the distributed node 301 is assigned node configuration data 311, the distributed node 302 is assigned node configuration data 312, and the distributed node 303 is assigned node configuration data 313. Each node configuration data 311-313 is a block of data that contains part data and serial number data. The part data is data about the node (e.g., if the node is a sensor, the part data can define what properties the sensor can sense, operating parameters of the sensor, and/or the like, including combinations and/or multiples thereof). The serial number data defines a unique serial number for the node, which acts to identify the node. The node configuration data 311-313 is digitally signed utilizing classical and/or quantum resistance cryptographic algorithms.

With continued reference to FIG. 3A, the distributed decentralized control system 300 is fielded. Upon the occurrence of a trigger event, each of the distributed nodes 301-303 transmits its respective node configuration data 311-313 to the engine control 122. Examples of trigger events include initialization of the distributed decentralized control system 300, a predetermined event, the replacement of one of the distributed nodes 301-303, the addition of a new distributed node, the replacement of the engine control 122, and/or the like, including combinations and/or multiples thereof. The engine control 122, subsequent to receiving the node configuration data 311-313, authenticates each of the distributed nodes 301-303 using a public key that is established when the distributed nodes 301-303 are manufactured.

With reference to FIG. 3B, the distributed decentralized control system 300 performs system configuration block creation, distribution, and validation. The engine control 122 creates a system configuration block 320. The engine control 122 In examples, the engine control 122 applies a digital signature and confidentiality as desired. The engine control 122 also updates a digital ledger where the digital ledger is a chain of system configuration blocks of pre-determined length. The engine control 122 transmits the system configuration block 320 to each of the distributed nodes 301-303 as shown. Each of the distributed nodes 301-303 updates its digital ledger to include the latest system configuration block 320.

Once authenticated and configured, the distributed decentralized control system 300 cannot be altered except by pre-determined secure techniques. The digital ledger, which is distributed across the components of the distributed decentralized control system 300, reduces the likelihood of corruption, tampering, and/or the like, including combinations and/or multiples thereof. This provides a cyber-resilient real-time (or near-real-time) configuration management architecture for control systems for aircraft engines that reduces the likelihood of counterfeit components being inserted or general system tampering.

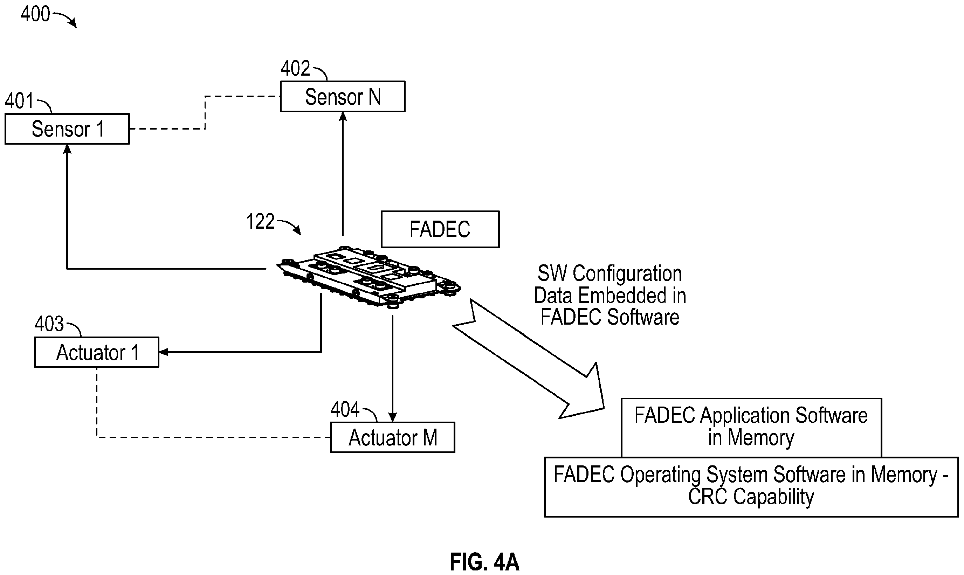

FIGS. 4A depicts a block diagram of a control system 400 for aircraft engines according to one or more embodiments described herein.

In FIG. 4A, the control system 400 includes sensor nodes 401, 402 and actuator nodes 403, 404 (collectively referred to as the "nodes 401-404"). It should be appreciated that any number and/or type of nodes can be implemented. The nodes 401-404 are communicatively coupled (e.g., by a wired and/or wireless link) to the engine control 122, which may be a FADEC. The engine control 122 includes software configuration data embedded therein according to one or more embodiments. According to an embodiment, the engine control 122 (e.g., FADEC) includes application software in memory of the engine control 122 and an operating system in memory of the engine control 122, where the operating system includes CRC capabilities as described herein. As described herein, CRC may be insufficient because CRC techniques can easily be overcome by a bad actor.

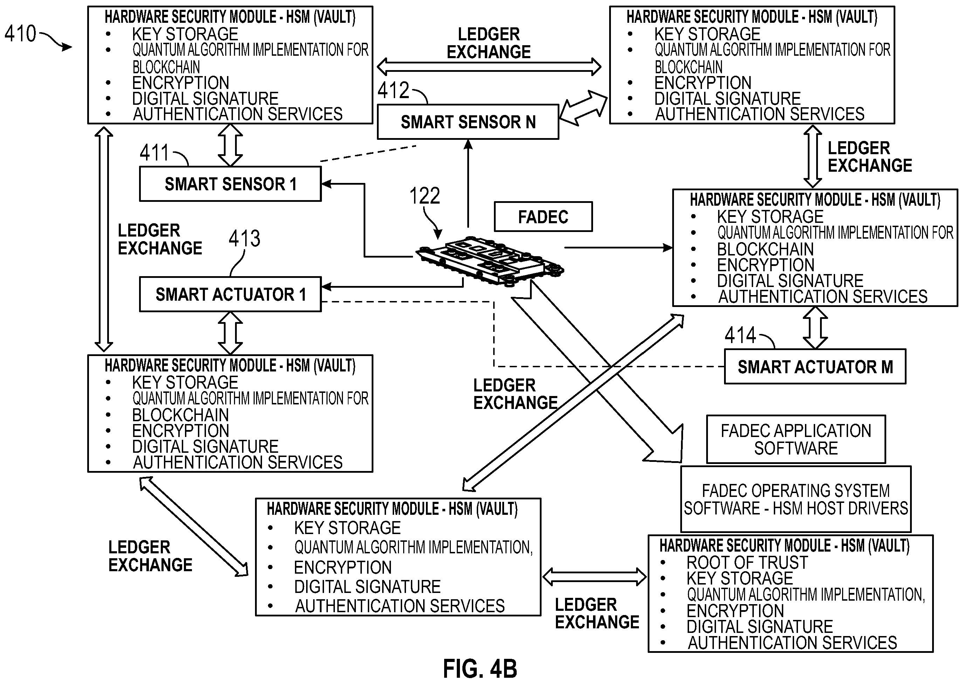

In contrast, FIG. 4B depicts a block diagram of a distributed decentralized control system 410 for aircraft engines according to one or more embodiments described herein. In this example, the distributed decentralized control system 410 includes smart nodes and the engine control 122, which may be a FADEC. The smart nodes include, for example, smart sensors 411, 412 and smart actuators 413, 414 (collectively referred to as the "smart nodes 411-414"). In this example, the smart nodes 411-414 include hardware security modules, which can be implemented as hardware, software, or a combination of hardware and software. The hardware security module provides for one or more of key storage, quantum algorithm implementation for blockchain, encryption, digital signature, authentication services and/or the like, including combinations and/or multiples thereof. As shown, the smart nodes 411-414 can exchange ledger information. In this example, the engine control 122 also includes a hardware security module, which can be implemented as hardware, software, or a combination of hardware and software. The hardware security module of the engine control 122 provides for one or more of a root of trust, key storage, quantum algorithm implementation, encryption, digital signature, authentication services, and/or the like, including combinations and/or multiples thereof.

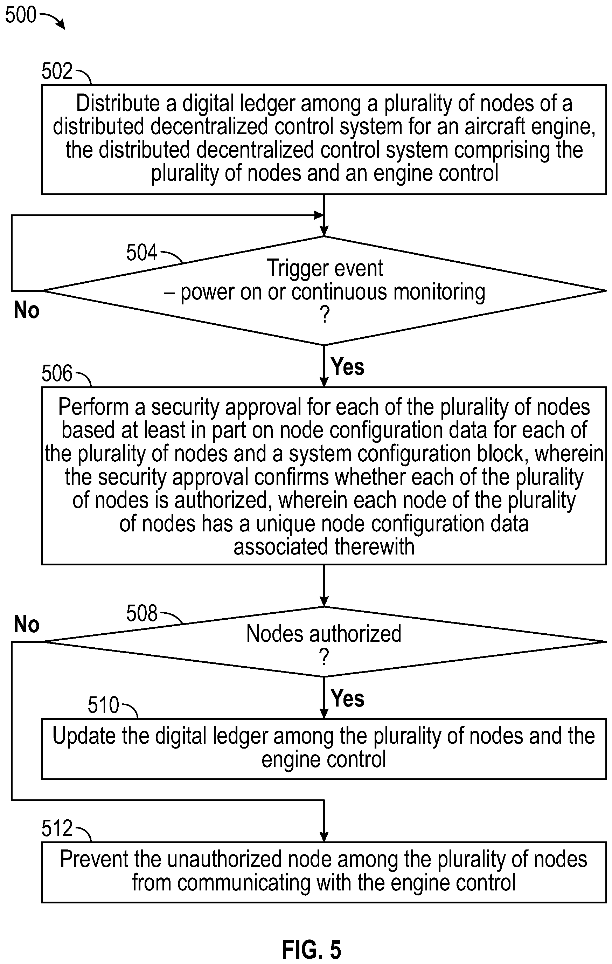

FIG. 5 is flow diagram of a method 500 for centralized security approval for a distributed decentralized system for an aircraft engine according to one or more embodiments described herein.

At block 502, a digital ledger is distributed among a plurality of nodes (e.g., the distributed nodes 301-303) of a distributed decentralized control system (e.g., the distributed decentralized control system 300) for an aircraft engine (e.g., the gas turbine engine 20). The distributed decentralized control system includes the plurality of nodes and an engine control (e.g., the engine control 122) as shown in FIGS. 3A, 3B, for example. According to an embodiment, the engine control 122 can be a full authority digital engine control. According to an embodiment, the digital ledger is based on the Ethereum blockchain or another suitable blockchain. According to an embodiment, at least one of the plurality of nodes can be a sensor (e.g., the sensors 401, 402). According to one or more embodiments described herein, at least one of the plurality of nodes can be an actuator (e.g., the actuators 404, 403).

At decision block 504, it is determined whether a trigger event occurs until a trigger event is determined to have occurred. Examples of trigger events include initialization of the distributed decentralized control system 300, a predetermined event, the replacement of one of the distributed nodes 301-303, the addition of a new distributed node, the replacement of the engine control 122, and/or the like, including combinations and/or multiples thereof.

At block 506, responsive to determining that a trigger event has occurred at decision block 504, the engine control 122 performs a security approval for each of the plurality of nodes based at least in part on node configuration data (e.g., the node configuration data 311-313) for each of the plurality of nodes and a system configuration block (e.g., the system configuration block 320). The security approval confirms whether each of the plurality of nodes is authorized (e.g., authorized to communicate with the engine control 122). Each node of the plurality of nodes has a unique node configuration data associated therewith. For example, the node configuration data 311 is unique to the distributed node 301, the node configuration data 312 is unique to the distributed node 302, and the node configuration data 313 is unique to the distributed node 303.

At decision block 508, it is determined whether each of the nodes is authorized based on the security approval. The security approval is described in more detail herein with reference to FIGS. 3A and 3B. According to one or more embodiments described herein, performing the security approval includes receiving, by the engine control, the unique node configuration data from each of the plurality of nodes. Performing the security approval can further include authenticating, by the engine control, each of the plurality of nodes using a public key. Performing the security approval can further include updating, by the engine control, the digital ledger. Performing the security approval can further include transmitting, by the engine control, the system configuration block to each of the plurality of nodes. Each of the plurality of nodes can update the digital ledger based at least in part on the system configuration block.

If it is determined that each of the nodes are authorized, the engine control updates the digital ledger among the plurality of nodes and the engine control at block 510. That is, the digital ledger is updated to record that each of the nodes has been checked using the security approval, and that each of the nodes is authorized based on the security approval. However, if any one node fails the security approval (e.g., is not authorized), that node is prevented from communicating with the engine control 122 at block 512. According to one or more embodiments described herein, the digital ledger is updated among the plurality of nodes (except the unauthorized node(s)) to indicate which nodes are authorized and which nodes are not authorized.

Additional processes also may be included, and it should be understood that the process depicted in FIG. 5 represents an illustration, and that other processes may be added or existing processes may be removed, modified, or rearranged without departing from the scope of the present disclosure.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method (500) comprising:
distributing a digital ledger among a plurality of nodes (301-303; 401-404; 411-414) of a distributed decentralized control system (300) for an aircraft engine (20), the distributed decentralized control system (300) comprising the plurality of nodes (301...414) and an engine control (122);
responsive to the occurrence of a trigger event, performing a security approval for each of the plurality of nodes (301...414) based at least in part on node configuration data (311-313) for each of the plurality of nodes (301...414) and a system configuration block (320), wherein the security approval confirms whether each of the plurality of nodes (301...414) is authorized, wherein each node (301...414) of the plurality of nodes (301...414) has a unique node configuration data (311-313) associated therewith; and
responsive to confirming that each of the plurality of nodes (301...414) is authorized, updating the digital ledger among the plurality of nodes (301...414) and the engine control (122).

2. The method of claim 1, wherein the digital ledger is based on the Ethereum blockchain.

3. The method of claim 1 or 2, wherein at least one of the plurality of nodes (401, 402; 411, 412) is a sensor.

4. The method of claim 1, 2 or 3, wherein at least one of the plurality of nodes (403, 404; 413, 414) is an actuator.

5. The method of any preceding claim, wherein performing the security approval comprises:
receiving, by the engine control (122), the unique node configuration data (311-313) from each of the plurality of nodes (301...414);
authenticating, by the engine control (122), each of the plurality of nodes (301...414) using a public key;
updating, by the engine control (122), the digital ledger; and
transmitting, by the engine control (122), the system configuration block (320) to each of the plurality of nodes (301...414), wherein each of the plurality of nodes (301...414) updates the digital ledger based at least in part on the system configuration block (320).

6. The method of any preceding claim, further comprising, responsive to confirming that at least one of the plurality of nodes (301...414) is not authorized, preventing the at least one of the plurality of nodes (301...414) from communicating with the engine control (122).

7. The method of any preceding claim, further comprising, responsive to confirming that at least one of the plurality of nodes (301...414) is not authorized, updating the digital ledger among the plurality of nodes (301...414) that are authorized and the engine control (122) to indicate that the at least one of the plurality of nodes (301...414) is not authorized.

8. The method of any preceding claim, wherein the engine control (122) is a full authority digital engine control.

9. A full authority digital engine control (122) comprising:
a memory (212) comprising computer readable instructions; and
a processing device (210) for executing the computer readable instructions, the computer readable instructions controlling the processing device (210) to perform operations comprising the method of any of claims 1 to 7, wherein the engine control (122) is the full authority digital engine control (122).

10. A distributed decentralized control system (300) comprising:
a plurality of nodes (301...414); and
a controller (122) configured to:
distribute a digital ledger among the plurality of nodes (301...414);
responsive to the occurrence of a trigger event, perform a security approval for each of the plurality of nodes (301...414) based at least in part on node configuration data (311-313) for each of the plurality of nodes (301... 414) and a system configuration block (320), wherein the security approval confirms whether each of the plurality of nodes (301...414) is authorized, wherein each node (301...414) of the plurality of nodes (301...414) has a unique node configuration data (311-313) associated therewith; and
responsive to confirming that each of the plurality of nodes (301...414) is authorized, update the digital ledger among the plurality of nodes (301...414) and the controller (122).

11. The distributed decentralized control system of claim 10, wherein the controller 122) is a full authority digital engine control.

12. The distributed decentralized control system of claim 10 or 11, wherein performing the security approval comprises:
receiving, by the controller (122), the unique node configuration data (311-313) from each of the plurality of nodes (301...414);
authenticating, by the controller (122), each of the plurality of nodes (301...414) using a public key;
updating, by the controller (122), the digital ledger; and
transmitting, by the controller (122), the system configuration block to each of the plurality of nodes (301...414), wherein each of the plurality of nodes (301...414) updates the digital ledger based at least in part on the system configuration block (320).

13. The distributed decentralized control system of claim 10, 11 or 12, further comprising, responsive to confirming that at least one of the plurality of nodes (301...414) is not authorized, preventing the at least one of the plurality of nodes (301...414) from communicating with the controller (122).

14. The distributed decentralized control system of any of claims 10 to 13, further comprising, responsive to confirming that at least one of the plurality of nodes (301...414) is not authorized, updating the digital ledger among the plurality of nodes (301...414) that are authorized and the controller (122) to indicate that the at least one of the plurality of nodes (301...414) is not authorized.
